# EUROPEAN PATENT SPECIFICATION

(11) **EP 1 078 225 B1**
(45) Date of publication and mention of the grant of the patent: **22.10.2003**
(21) Application number: 99924134.2
(22) Date of filing: 05.05.1999
(51) Int. Cl.: G01C 21/20

(54) **NAVIGATION SYSTEM WITH USER INTERFACE**
NAVIGATIONSSYSTEM MIT BENUTZERSCHNITTSTELLE
SYSTEME DE NAVIGATION EQUIPE D'UNE INTERFACE UTILISATEUR

(30) Priority: 05.05.1998 US 84227 P; 05.05.1998 US 84228 P
(43) Date of publication of application: 28.02.2001
(73) Proprietor: Magellan Dis Inc., Rochester Hills, MI 48309 (US)
(72) Inventor: MILLINGTON, Jeffrey, A., Rochester Hills, MI 48309 (US); MAXWELL, Kenneth, G., Port Huron, MI 48060 (US); MOUSER, Michael, Ortonville, MI 48462 (US)
(74) Representative: Shanks, Andrew
(86) International application number: US9909779
(87) International publication number: WO99057521

(56) References cited:
- EP-A- 0 478 438
- EP-A- 0 704 676
- EP-A- 0 829 704
- US-A- 5 479 602

## Description

### BACKGROUND OF THE INVENTION

The present invention relates generally to in-vehicle navigation or "route-guidance" systems and more particularly to an improved graphical user interface for such systems.

In-vehicle navigation systems generally comprise motion and position-determining devices, such as GPS receivers, accelerometers, etc., which determine the current position of a vehicle relative to a database of roads. A graphical user interface, typically including a display and user input device, enables the user to select a destination from the database of roads. The display then provides turn-by-turn instructions to the driver guiding the driver to the desired destination from the current position.

In some known navigation systems, the graphical user interface provides a hierarchical menu for selecting a desired destination. For example, the driver initially selects from several groups of destinations such as: "intersections," "points of interest," "cities," "street address," etc. After selecting one of the groups of destinations, the user may be provided with another plurality of subgroups of destinations. For example, after selecting "point of interest," the driver may then select from among hotels, grocery stores, theatres, etc.

The known navigation system provides text-based menus. The display typically provided in the navigation system is typically three to five inches diagonally; therefore, a graphical user interface which is efficient in both communicating information and receiving input from the driver is desirable.

EP patent 0 829 704 A2 describes a navigation system where a map display includes icons representing relevant information. Each icon is positioned on the map in the location of the information the icon represents. If there are a large number of icons for a map either all of the icons or the scale of the map may be changed in order to accommodate all icons fitting on the display at a single time. Selecting the appropriate icon accesses the desired information. When an icon is selected it may light up, flash on and off, or the non-selected icons may fade in order to distinguish the selected icon.

### SUMMARY OF THE INVENTION

The present invention provides a vehicle navigation system having a display including a plurality of icons, each associated with a plurality of potential destinations in a database or other options. A user input device selectively activates one of the plurality of icons. When activated, the activated icon is enlarged, includes a text flag adjacent the icon, and is animated. Preferably, the animated icon comprises a three or four frame animation. The animation of the activated icon provides an efficient graphical user interface in that the concept with which the icon is associated is more readily perceivable and is reinforced by the animation.

In a preferred embodiment, the animation of the activated icon is provided utilizing at least one base frame and a plurality of transition files. The base file includes all the necessary information for displaying all of the pixels in the icon in a first state. A first transition file contains only that information necessary to transform the icon from the first state to a second state. A second transition file contains only that information necessary to transform the icon from the second state to a third state, and so on.

In an alternative embodiment, the icon may comprise a graphic indicator, such as a compass. The icon includes a plurality of base frames, each comprising all of the information for all of the pixels necessary to represent the icon in each of a plurality of states, which for a compass is preferably the North, South, East and West positions. A plurality of transition files each include information necessary to transform the compass to intermediate states from each of the base frames and to other intermediate states.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:

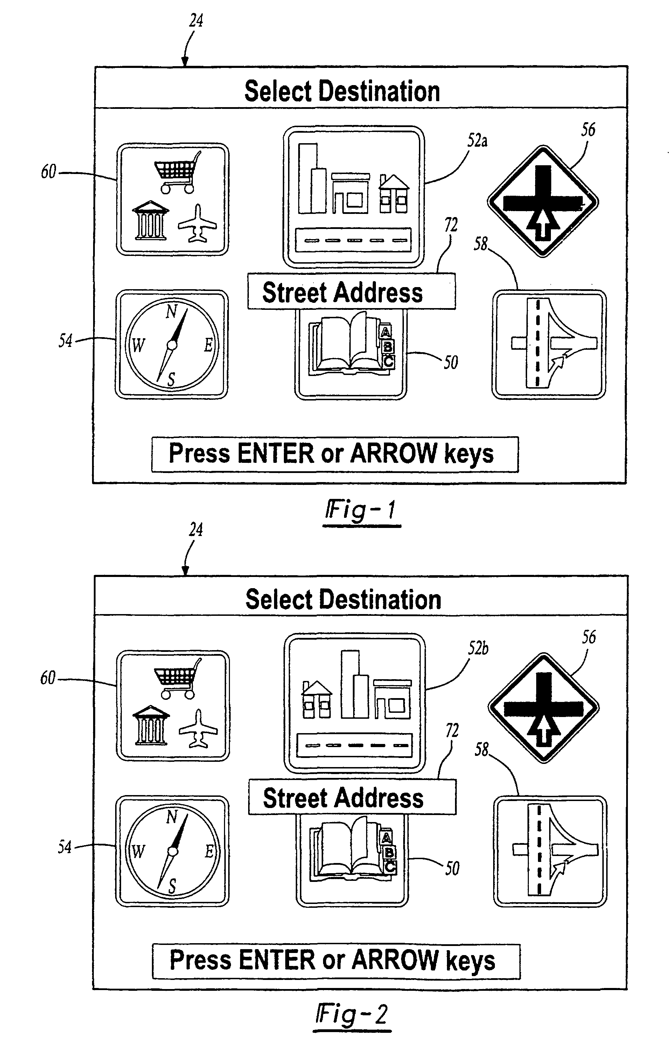

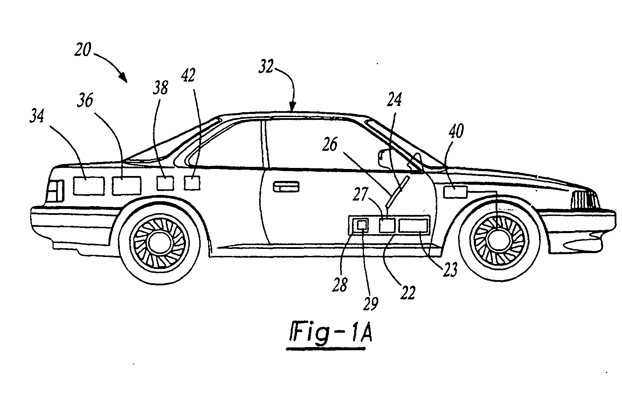

Figure 1A is a schematic of the navigation system of the present invention.
Figures 1-3 illustrate the three sequential frames for animation of the street address icon.
Figures 4-8 illustrate the five sequential frames for animation of the points of interest icon.
Figures 9-10 illustrate the two sequential frames for animation of the freeway entrance/exit icon.
Figures 11-13 illustrate the three sequential frames for the animation of the address book icon.
Figures 14-16 illustrate the three frames for animation of the intersection icon.
Figure 17 illustrates an options screen.
Figure 18 illustrates a technique for creating the animations of the icons.
Figure 19 illustrates the points of interest screen displayed upon selection of the points of interest icon.
Figure 20 illustrates the street address screen displayed upon selection of the street address icon.
Figure 21 illustrates a street address screen displayed subsequent to that shown in Figure 20.
Figure 22 illustrates the address book screen displayed upon selection of the address book icon.

### DETAILED DESCRIPTION OF THE PREFERRED EMBODIMENT

The navigation system 20 of the present invention is shown schematically in Figure 1A. The navigation system 20 includes a CPU 22 having memory 23 (such as RAM) and connected to a display 24, such as a high resolution LCD, LED or other flat panel display. The CPU 22 is also connected to an input device 26 such as a mouse, keyboard, key pad, remote device or microphone. Preferably, the input device 26 is an eight-way directional keypad. Alternatively, the display 24 can be a touch screen display. The CPU 22 preferably further includes VRAM 27 for the display 24.

The navigation system 20 further includes a storage device 28, such as a hard drive 28 or CD ROM, connected to the CPU 22. The storage device 28 contains a database 29 including a map of all the roads in the area to be traveled by the vehicle 32 as well as the locations of potential destinations, such as addresses, hotels, restaurants, or previously stored locations. The software for the CPU 22, including the graphical user interface, route guidance, operating system, position-determining software, etc may also be stored in storage device 28 or alternatively in ROM or flash memory.

The navigation system 20 preferably includes position and motion determining devices, such as a GPS receiver 34, a gyroscope 36, a compass 38, a wheel speed sensor 40 and a multi-axis accelerometer 42, all connected to the CPU 22 (connections not shown for simplicity). Suitable position and motion determining devices are well known and are commercially available.

As is well known, the position and motion determining devices determine the position of the vehicle 32 relative to the database of roads utilizing dead-reckoning, map-matching, etc. Further, as is known in navigation systems, the user can select a destination relative to the database of roads utilizing the input device 26 and the display 24. The navigation system 20 then calculates and displays a recommended route directing the driver of the vehicle 32 to the desired destination. Preferably, the navigation system 20 displays turn-by-turn instructions on display 24, guiding the driver to the desired destination.

Figure 1 illustrates the display 24 of Figure 1A displaying a menu of icons 50-60, from which the user can choose. Each of the icons 52, 56, 58, 60 is associated with a plurality of locations in the database, a method of selecting a destination relative to the database. The icons 50-60 include an address book icon 50, a street address icon 52a (shown activated), off-road navigation icon 54, intersection icon 56, freeway entrance/exit icon 58, and points of interest icon 60. Of course, other icons could also be included or substituted. The address book icon 50 is associated with a plurality of previously stored destinations that the user has stored and associated with a name or other indicator. Via the street address icon 52 the user enters a street address or the location as the destination. The off-road navigation icon 54 causes the navigation system 20 to enter a navigation mode for off-road navigation. Via the intersection icon 56, the user enters the names of two streets, the intersection of which will be chosen as the destination. If the user selects the freeway entrance/exit icon 58 the user will be prompted to enter the freeway and entrance or exit to be chosen as the destination. The points of interest icon 60 is associated with a plurality of destinations which are grouped by type, such as hotels, restaurants, airports, stores, etc.

Preferably, only one of the icons 50-60 is activated and the remainder are inactive at any one time. In the Figures, the numeral references 50-60 represent inactive icons, while numeral references with letter designations (a-e) represent the respective frames of a corresponding animated icon. As will be described in more detail below, the activated icon becomes animated, enlarged and a text flag is added adjacent the icon, thus distinguishing it from the inactive icons. Preferably, each animated icon 50-60 comprises a three to five frame animation. Further, an audible output of a voice also identifies the currently activated icon. When an activated icon is selected (such as by pressing an "enter" key on the input device 26), the display 24 then displays appropriate subsequent screens, prompting the user to choose from among the locations associated with the activated icons or enter the requested information.

Preferably, the street address icon 52a is activated and animated initially, i.e. prior to any input from input device 26, as shown in Figure 1. Then, using the user input device 26, which is most preferably a directional input device, the other icons 50, 54-60 can be selectively activated. Preferably the user input device 26 is an eight direction keypad. Thus, any one of the icons 50, 54-60 can be activated with a single keystroke.

Figures 1-3 illustrate the three frames 52a-c corresponding to the street address. While the street address icon 52 is activated, it continuously loops through the three frames 52a-c, while the other icons are not animated. The activated street address icon frames 52a-c are enlarged and larger than the inactive icons 50-60. Further, a text flag 72 is displayed adjacent the activated street address icon frames 52a-c. The animation and enlargement clearly and efficiently communicate to the user which icon has been activated. The animation and text flag 72 also reinforce the association and identity of the associated icon 52.

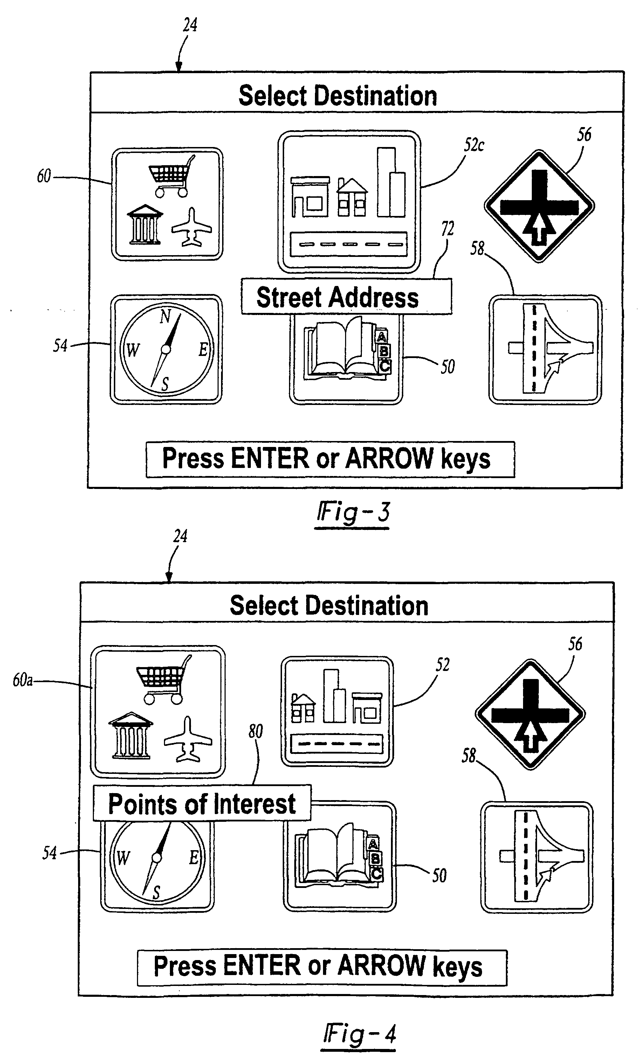

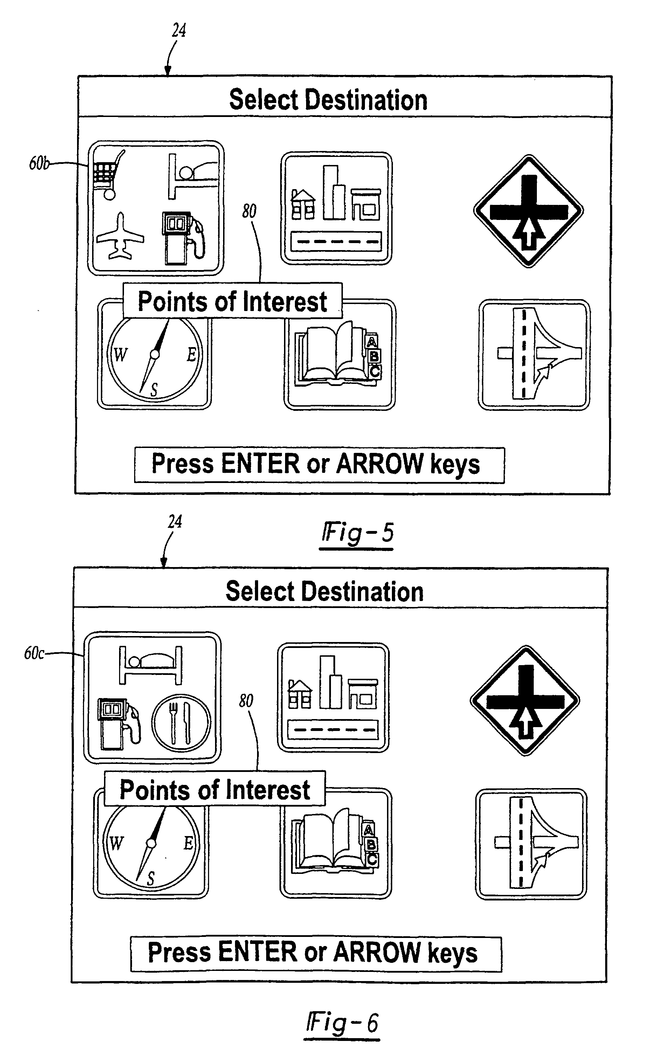

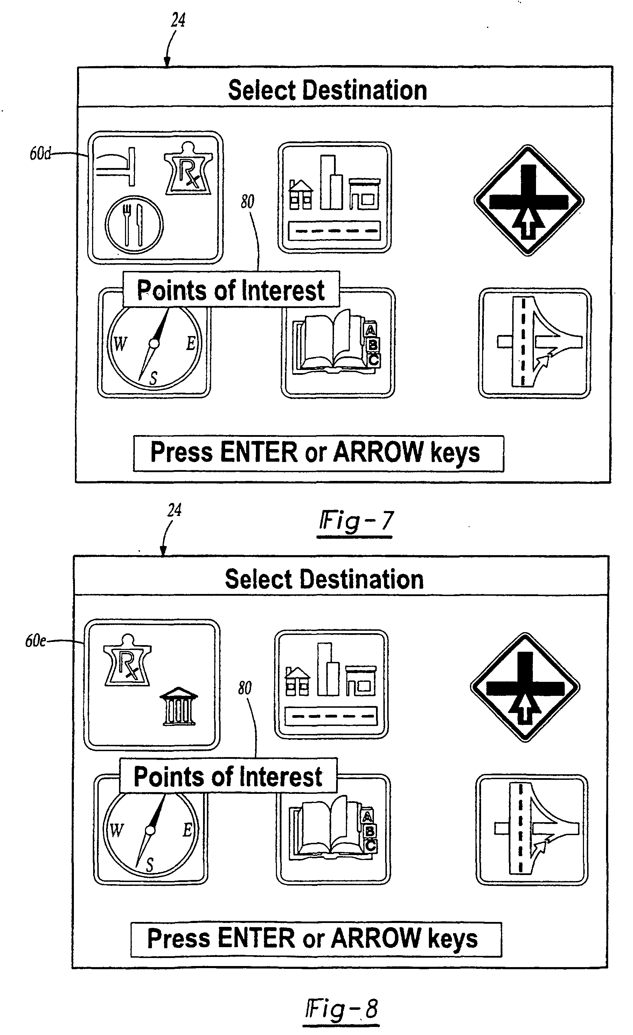

Figures 4-8 illustrate the first through fifth frames 60a-60e of the animation of the points of interest icon 60. The points of interest icon 60 continuously loops through the five animation frames 60a-e as long as the points of interest icon is activated. The activated points of interest icons 60a-e are enlarged when activated and include a text flag 80 also identifying the icon 60a-e.

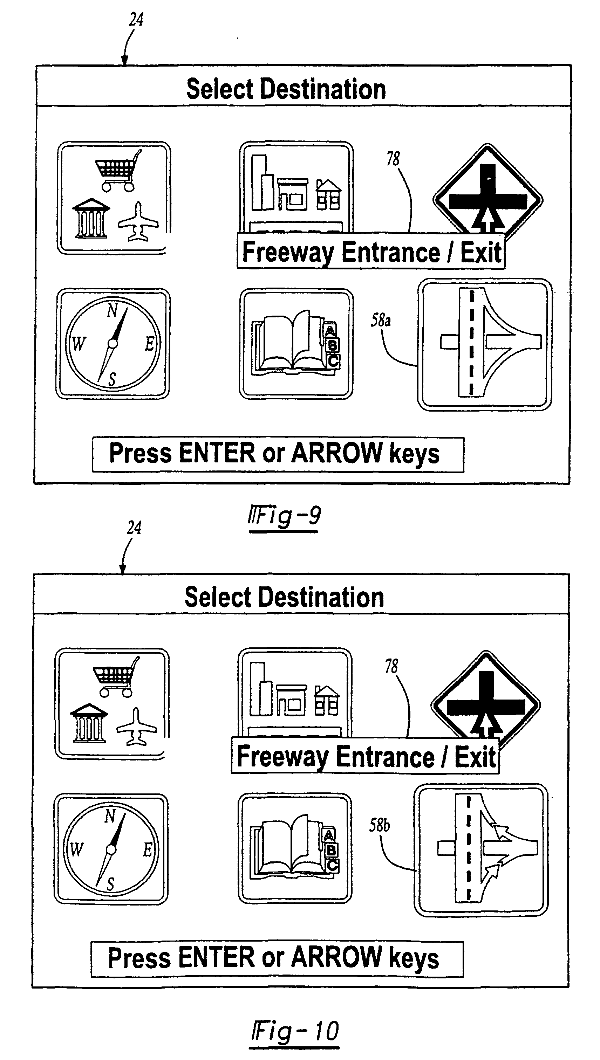

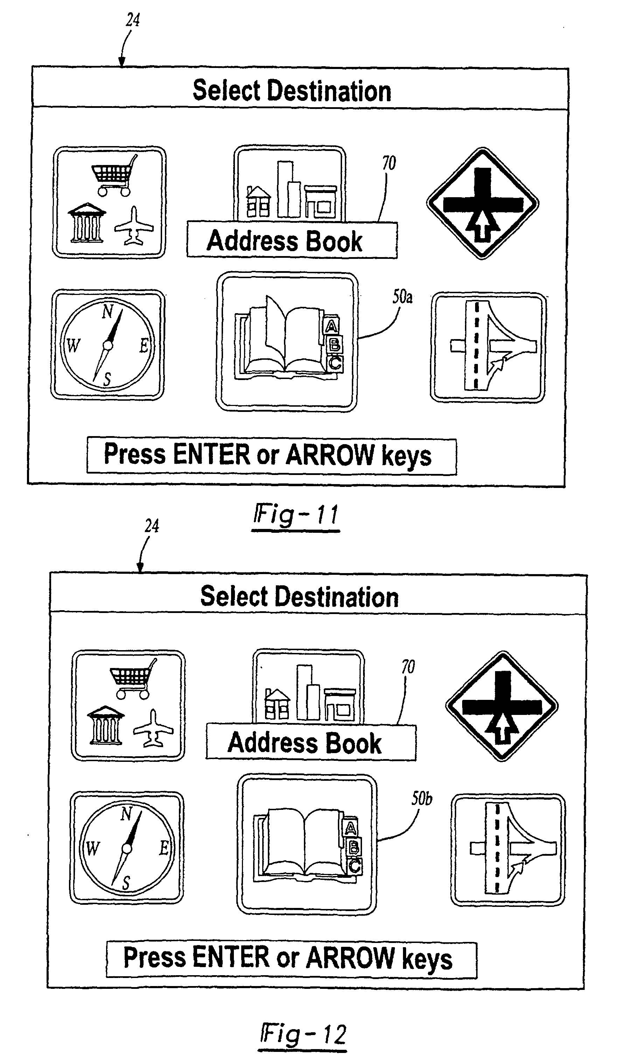

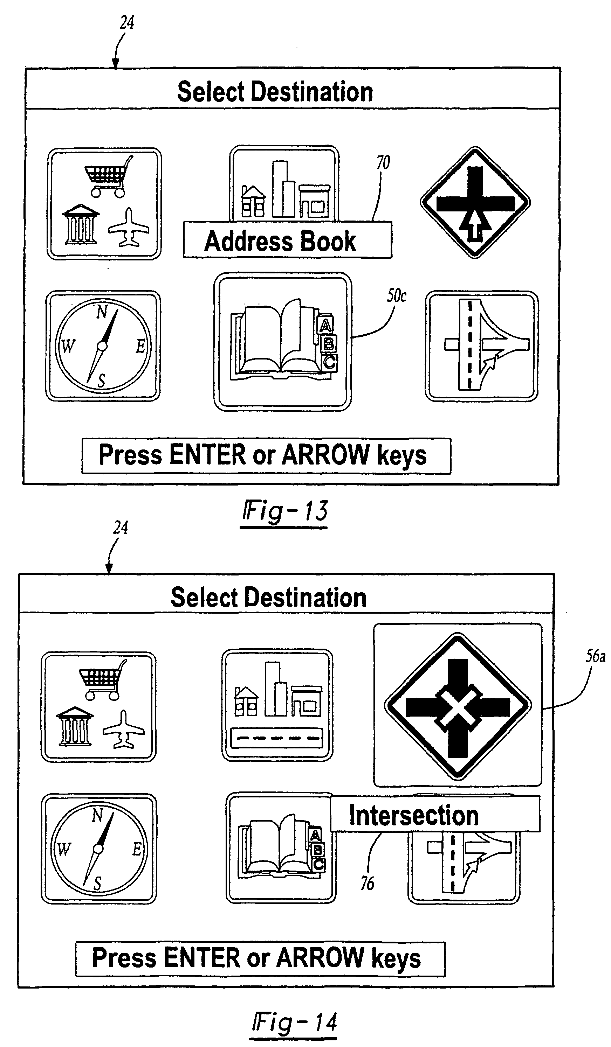

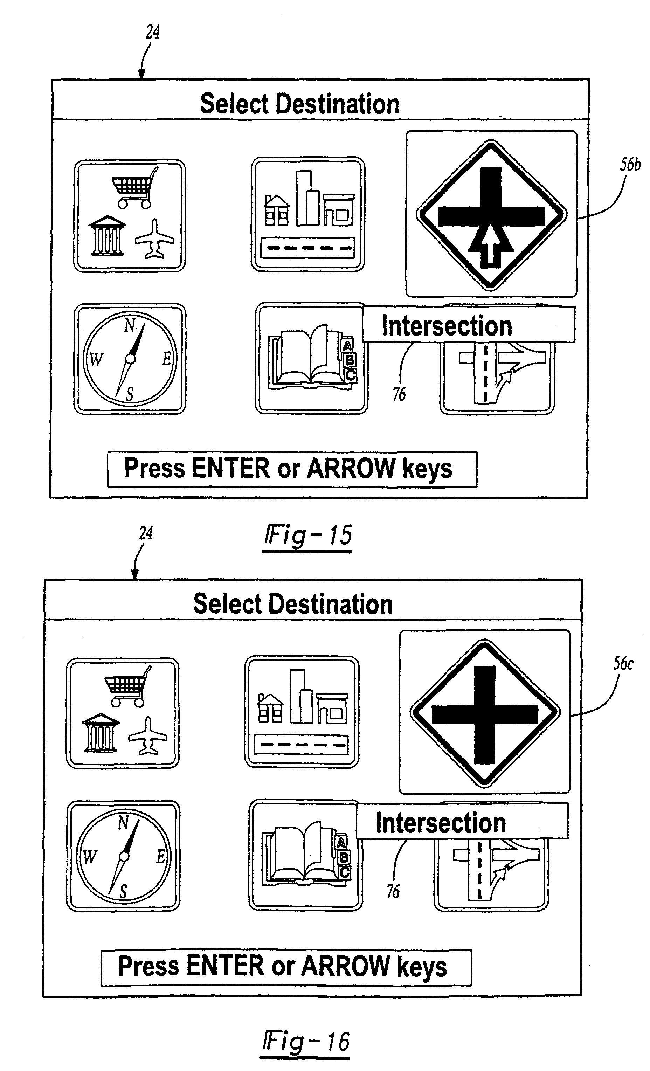

Figures 9-10 show the two animated frames 58a-b of the freeway entrance/exit icon 58 and its corresponding text flag 78. Figures 11-13 illustrate the first, second and third frames 50a-c respectively of the address book icon 50 and its text flag 70. Figures 14-16 show the three animated frames 56a-c of the intersection icon 56 and its text flag 76.

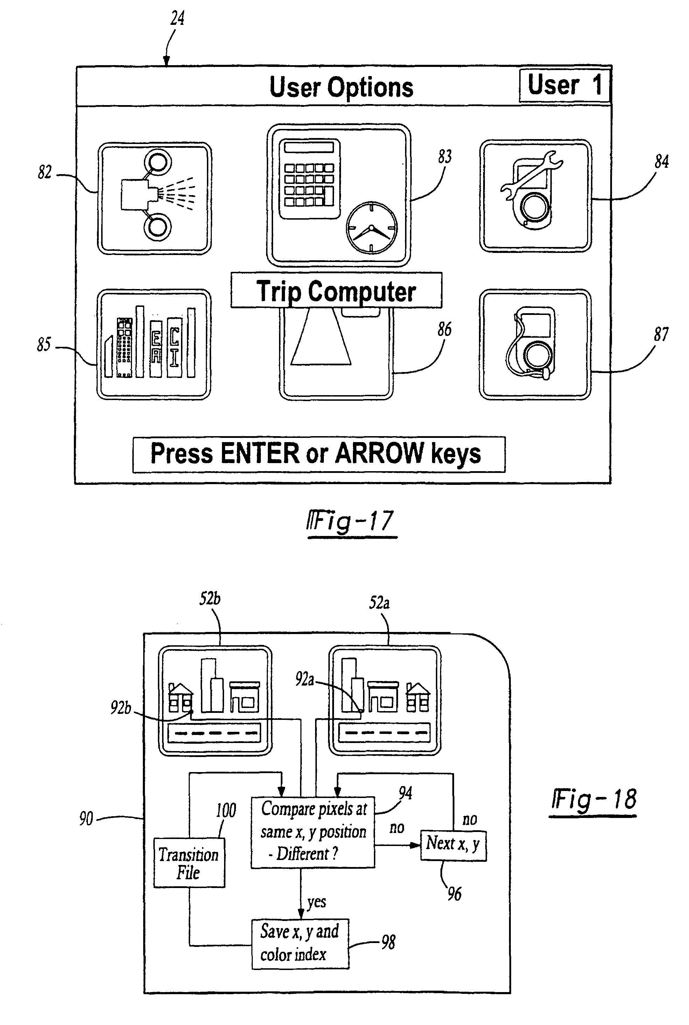

The input device 26 includes an "options" button, which when activated causes display 24 to display the options screen shown in Figure 17. The options screen includes a demonstration icon 82, a trip computer icon 83, a configuration icon 84, services directories icon 85, communications icon 86 and diagnostics icon 87. Each of these is preferably enlarged, animated and displayed adjacent a text flag when activated, as described above.

All of the inactive icons 50-60, 82-87 and the first frame of each active icon 50a, 52a, 54a, 56a, 58a, 60a (and any other screen objects) on the display 24 are "pre-rendered" using a 3D modelling program. The bitmaps of the icons are stored in a "C" language header file. To display the inactive icons 50-60 (such as is shown in Figures 1-17) the CPU 22 performs a memory copy from the memory 23 onto the VRAM 27 (Figure 1). Since the objects are pre-rendered, the computation time and the power required are reduced. Complex rendering, including textures and ray tracing can be utilized without unduly burdening the CPU 22 during run time.

Figure 18 illustrates the technique by which the icons *50-60* in Figures 1-17 are animated, shown by way of example with icons 52a and 52b. Each frame 52a, 52b of the animation is first created as a bit map file which contains all of the information, on a pixel-by-pixel basis, for displaying all of the pixels in that frame. Each frame is preferably anti-aliased. Then, a computer 90 programmed to operate according to the flow chart in Figure 18 compares each pixel 92a in the frame 52a with the corresponding pixel 92b (at the same x-y position) in frame 52b in step 94. If the pixel 92 is the same in both frames 52a-b, *i*.*e*., the pixel 92 is not changed from one frame 52a-b to the next, the software does not save information relating to that pixel 92 and increments to the next pixel in step 96. If, and only if, the pixel 92 changes in the two consecutive frames 52a, b, then the information indicating how to display that pixel in the second frame 52b saved in step 98. In other words, the only information saved is for the pixels 92 that need to be changed in order to transition from the first frame 52a to the second frame 52b. The pixels 92 that are changed are stored in a transition file 100 which indicates the pixel 92 position (x, y) and the color index to which the pixel is changed. The first frame 52a of the animation (or "base frame"), is a complete bit map indicating how to display all of the pixels in the icon 52a. Information indicating how to change the base frame 52a to the second frame 52b is stored as the transition file 100 and includes only information indicating how to display any pixels 92 that have changed between the base frame 52a and the second frame 52b. Another transition file indicates how to change any pixels from the second frame 52b to the third frame 52c, and so on. It should be noted that the computer 90 which converts the full bit map files to the transition files 100 is preferably run apart from the navigation system 20. The full bit maps, other than the first frame, are not stored on the navigation system 20. Identical techniques are followed for the other animated icons.

In the navigation system 20 (Figure 1A), to animate the icon 52 the CPU 22 performs a memory copy from the memory 23 onto the VRAM 27 of the base frame 52a as shown in Figure 1. The CPU 22 then modifies only the pixels in the VRAM 27 as indicated by the first transition file 100 to produce the second frame 52b of the street address icon 52 as shown in Figure 2. The CPU 22 then modifies the pixels in the VRAM 27 according to a second transition file to produce the third frame 52c of the street address icon 52 as shown in Figure 3. The CPU 22 then modifies the pixels in the VRAM 27 according to a third transition file to return to the street address icon 52a as shown in Figure 1. Alternatively, the base frame 52a can be completely reloaded. The CPU 22 and display 24 continue to loop through the frames 52a-c until either the street address icon 52 is selected or another icon is activated.

Upon selection of the off-road navigation icon 54 (e.g. Figure 1), this same animation technique is preferably used to display a compass (not shown) similar to the off-road navigation icon 54. The compass includes an arrow which is displayable at any one of numerous (up to 360) different rotational positions. The compass preferably includes a plurality of base frames, preferably four, one base frame each of the arrow pointing North, South, East and West. Transition files contain only information indicating how to change the compass from a base frame to an adjacent frame (i.e. an adjacent rotational position of the arrow). If a rapid large change is required, a new base frame closer to the frame to be displayed can be loaded. For example, if the compass is currently displayed with the arrow pointing due North and a change to Southeast is required, the East base frame is loaded, followed by execution of several transition files until Southeast is achieved. Utilization of more than one base frame could also be used for displaying other gauges, such as tachometers.

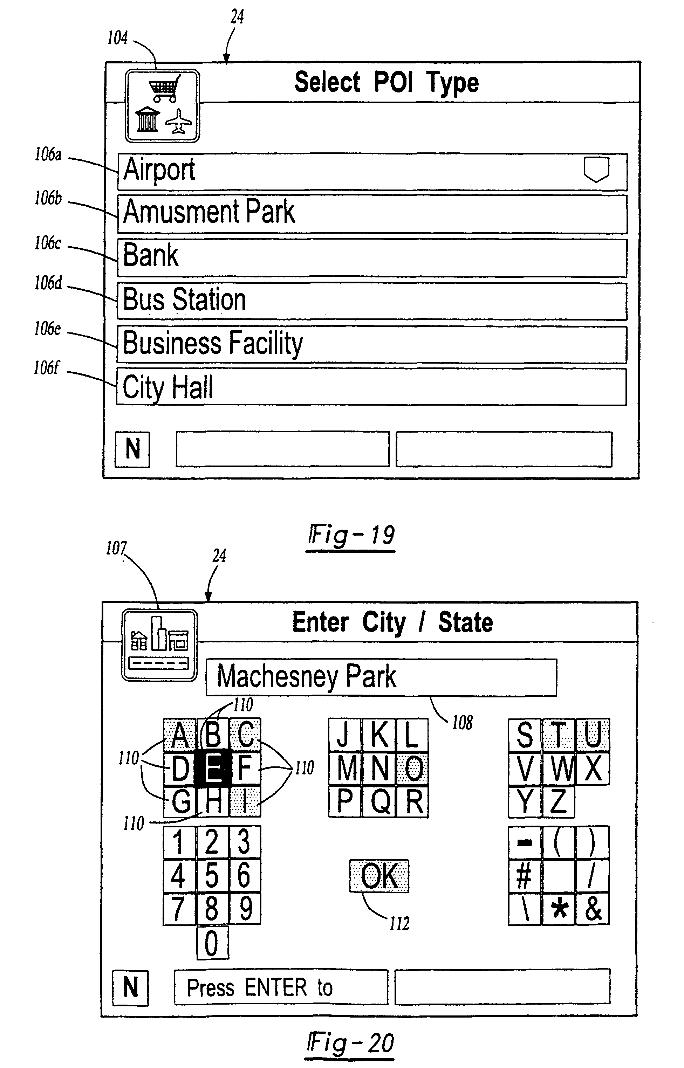

Figure 19 illustrates the points of interest screen displayed on screen 24 after selection of the points of interest icon 60a-e (Figures 4-8). In the points of interest screen, a thumbnail POI icon 104 is displayed in the upper left hand corner of the screen. The thumbnail POI icon 104 reminds the user what screen is currently displayed and further reinforces the association of the points of interest icon 60. The points of interest screen also lists a plurality of points of interest types 106a-f, any of which can be selected using the user input device 26 (Figure 1a). As is known, upon selection of any of the points of interest types 106, a screen listing points of interest of that type are then displayed on display 24. As is known, the user can then select a specific point of interest as a destination for a route for which the navigation system 20 provides turn by turn instructions.

Figure 20 shows the street address screen displayed on display 24 upon selection of the street address icon 52a-c (Figures 1-3). A thumbnail street address icon 107 (preferably an identical, smaller version of the inactivated street address icon 52, such as in Figure 4) is displayed in the upper left hand corner of the screen. The thumbnail street address icon 107 reminds the user which screen is displayed and further reinforces the association of the thumbnail street address icon 107, and consequently the street address icon 52 and 52a-c (Figures 1-17). Generally, to enter a destination in this mode, the user first enters a city and/or state, followed by a street address in the text field 108 by selecting the character buttons 110. Preferably, the input device 26 is an eight-way cursor pad. Initially, the "okay" icon 112 is activated. Upon the first entry from the eight-way directional input device 26, a corresponding center character 116 ("E","N", "W", "5" or [space]) is activated. The activated character can be selected pressing an "enter" button on the input device 26. Another character immediately surrounding the center character can be activated utilizing the directional input device 26.

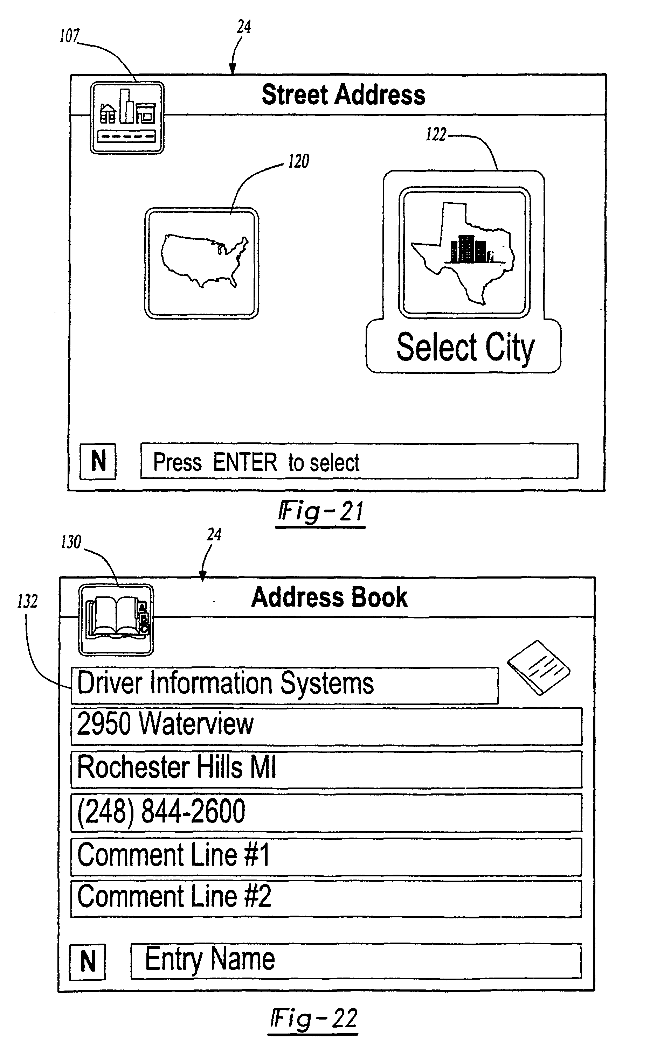

If necessary, the user can select a state or city for the street address by selecting the select state icon 120 and/or select city icon 122 shown in Figure 21. In Figure 21, the select city icon 122 is shown activated and enlarged with the adjacent text flag 124.

Figure 22 illustrates the address book screen including a thumbnail address book icon 130 in the upper left comer of the display 24. The address book screen contains previously stored names and addresses 132 which the user can scroll through or select or enter using the input device 26. The user can then select to be routed to the associated destination.

Preferably, the navigation system 20 permits the user to change the color themes of the display 24 to match or coordinate with the interior of the vehicle. Preferably, the user can select the color themes and other options utilizing radio buttons or check boxes on the display 24.

The intensity or brightness of the display is preferably automatically adjusted based upon the time of day, time of the year and geographical location, all of which can be determined by the GPS receiver. The GPS receiver receives time of day and time of year information from the GPS satellites. The GPS receiver and the other positions determining sensors all well as the map matching and other position determining software determine the geographic location of the vehicle 32. Based upon this information, the navigation system can determine the expected ambient light and adjust the brightness and intensity of the display 24 appropriately, i.e. increasing the brightness and intensity of the display 24 during the day and decreasing the brightness and intensity of the display 24 at night.

## Claims

1. A vehicle navigation system (20) comprising:
a database (29) of locations;
a display displaying a plurality of icons (50-60); and
a user input device (26), **characterized by**
each of said plurality of icons (50-60) being associated with at least one method of selecting from among said locations in said database (29), and further **characterized by** said display (24) being arranged to animate an activated icon of said plurality of icons (50-60) by motion in response co activation of the activated icon by the user input device (26) .

2. The vehicle navigation system (20) of Claim 1 further including
a system for determining the position of the vehicle (32) relative co said database (29);
said user input device (26) selecting a desired destination relative to said database (29) using an associated method of selecting from among said locations in said database (29) associated with said selected icon;
a system for determining a route from said database (29) between a position of the vehicle (32) to said desired destination.

3. The vehicle navigation system (20) of Claim 1 wherein each said icon (50-60) is associated with a group of locations in said database (29), said user input device (26) selecting a desired destination from among said locations associated with said group associated with said activated icon.

4. The vchicle navigation system (20) of Claim 1 further including:
a base frame comprising information for displaying a first icon of said plurality of icons (50-60);
at least one transition file (100) comprising information for changing the display (24) of said first icon, said display (24) first displaying said first icon based upon said base frame and subsequently changing said display (24) of said first icon based upon said at least one transition file (100) to provide animation of the first icon.

5. The vehicle navigation system (20) of Claim 4 wherein said first icon at includes a plurality of pixels (92), said base frame including information for displaying all of said plurality of pixels (92), said transition file (100) comprising information for displaying only a subset of said plurality of pixels (92) less than all of said plurality of pixels (92).

6. The vehicle navigation system (20) of Claim 5 further including a plurality of base frames, each including different information for displaying all of said pixels (92) for said icon.

7. The vehicle navigation system (20) of Claim 5 further including a plurality of said transition files (100), each including information for modifying said display (24) from one state to another incremental state.

8. The vehicle navigation system (20) of Claim 1 wherein the display (24) enlarges the activated icon in response to the activation of the activated icon by the user input device (26).

9. The vehicle navigation system (20) of Claim 1 further including a text flag (72, 78, 80) displayed on the display (24) next to the animated icon in response to the activation of the activated icon by the user input device (26), the text flag (72, 78, 80) indicating the locations in the database (29) with which said animated icon is associated.

10. The vehicle navigation system (20) of Claim 1 wherein said activated icon is animated by said display (24) displaying a plurality of frames of said activated icon.

11. A method for operating a graphical user interface in a vehicle navigation system (20) including the steps of:
a) displaying a plurality of icons (50-60) on a display (24);
b) selecting at least one of the icons (50-60);
said method **characterized by** the steps of:
c) associating each of the plurality of icons (50-60) with a different method for selecting among locations in a database (29);
d) animating at least one of the plurality of icons (50-60) on the display (24) by motion; and
e) selecting the at least one animated icon.

12. The method of Claim 11 further including the steps of:
f) displaying said icon (50-60) based upon a base frame comprising information for displaying said plurality of pixels (92);
g) changing said display (24) of said icon based upon a transition file (100) comprising information for displaying a subset of said plurality of pixels (92), less than all of said plurality of pixels (92).

13. , The method of claim 12 further including the steps of:
h) in said step d), displaying a first frame comprising said base frame;
i) after said step h), displaying a second frame comprising said base frame as modified according to said transition file (100).

14. The method of Claim 13 further including the steps of:
associating each of said plurality of icons (50-60) with at least one destination; and
selecting a destination associated with said at least one of the animated icons selected in said step e).

15. The method of Claim 11 further including the steps of:
determining a current position;
selecting said at least one of said plurality of icons (50-60) animated in said step d);
selecting a desired destination associated with said at least one of said plurality of icons; and
determining a route from said current position to said desired destination.

16. The method of Claim 11 further including the steps of:
f) displaying an associated screen in response to said step e):
g) displaying a smaller version of the at least one icon on the associated screen in response to said step f).

## Patentansprüche

1. Fahrzeugnavigationssystem (20), umfassend:
eine Datenbank (29) von Orten;
eine Anzeige, die eine Vielzahl von Icons (50-60) anzeigt; und
eine Benutzereingabeeinrichtung (26), **dadurch gekennzeichnet, dass**
jedes der Vielzahl von Icons (50-60) zu wenigstens einem Verfahren zum Auswählen unter den Orten der Datenbank (29) gehört, und ferner **gekennzeichnet dadurch, dass** die Anzeige (24) angeordnet ist, um ein aktiviertes Icon der Vielzahl von Icons (50-60) durch eine Bewegung im Ansprechen auf eine Aktivierung des aktivierten Icons durch die Benutzereingabeeinrichtung (26) zu animieren.

2. Fahrzeugnavigationssystem (20) nach Anspruch 1, ferner einschließend:
ein System zum Bestimmen der Position des Fahrzeugs (32) relativ zu der Datenbank (29);
wobei die Benutzereingabeeinrichtung (26) einen gewünschten Zielort relativ zu der Datenbank (29) unter Verwendung eines zugehörigen Verfahrens zum Wählen unter den Orten in der Datenbank (29), die zu dem gewählten Icon gehören, wählt; und
ein System zum Bestimmen einer Route von der Datenbank (29) zwischen einer Position des Fahrzeugs (32) zu dem gewünschten Zielort.

3. Fahrzeugnavigationssystem (20) nach Anspruch 1, wobei jedes besagte Icon (50-60) zu einer Gruppe von Orten in der Datenbank (29) gehört, wobei die Benutzereingabeeinrichtung (26) einen gewünschten Zielort unter den Orten wählt, die zu der Gruppe gehört, die zu dem aktivierten Icon gehört.

4. Fahrzeugnavigationssystem (20) nach Anspruch 1, ferner umfassend:
einen Basisrahmen, der eine Information zum Anzeigen eines ersten Icons der Vielzahl von Icons (50-60) umfasst; und
wenigstens eine Übergangsdatei (100), die Information zum Ändern der Anzeige (24) des ersten Icons, wobei die Anzeige (24) zuerst das erste Icon auf Grundlage des Basisrahmens anzeigt, und danach zum Ändern der Anzeige (24) des ersten Icons auf Grundlage der wenigstens einer Übergangsdatei (100), um eine Animation des ersten Icons bereitzustellen, umfasst.

5. Fahrzeugnavigationssystem (20) nach Anspruch 4, wobei das erste Icon eine Vielzahl von Pixeln (92) einschließt, wobei der Basisrahmen Information zum Anzeigen aller der Vielzahl von Pixeln (92) einschließt, wobei die Übergangsdatei (100) Information zum Anzeigen nur eines Untersatzes der Vielzahl von Pixeln (92), weniger als alle der Vielzahl von Pixeln (92), umfasst.

6. Fahrzeugnavigationssystem (20) nach Anspruch 5, ferner umfassend eine Vielzahl von Basisrahmen, wobei jeder eine andere Information zum Anzeigen aller der Pixel (92) für das Icon einschließt.

7. Fahrzeugnavigationssystem (20) nach Anspruch 5, ferner einschließend eine Vielzahl der Übergangsdateien (100), wobei jede Information zum Modifizieren der Anzeige (24) von einem Zustand auf einen anderen inkrementalen Zustand einschließt.

8. Fahrzeugnavigationssystem (20) nach Anspruch 1, wobei die Anzeige (24) das aktivierte Icon im Ansprechen auf die Aktivierung des aktivierten Icons durch die Benutzereingabeeinrichtung (26) vergrößert.

9. Fahrzeugnavigationssystem (20) nach Anspruch 1, ferner umfassend ein Textflag (72, 78, 80), das auf der Anzeige (24) neben dem animierten Icon im Ansprechen auf die Aktivierung des aktivierten Icons durch die Benutzereingabeeinrichtung (26) angezeigt wird, wobei das Textflag (72, 78, 80) die Orte in der Datenbank (29) anzeigt, zu denen das animierte Icon gehört.

10. Fahrzeugnavigationssystem (20) nach Anspruch 1, wobei das aktivierte Icon durch die Anzeige (24) animiert wird, die eine Vielzahl von Rahmen des aktivierten Icons anzeigt.

11. Verfahren zum Betreiben einer graphischen Benutzerschnittstelle in einem Fahrzeugnavigationssystem (20), umfassend die folgenden Schritte:
a) Anzeigen einer Vielzahl von Icons (50-60) auf einer Anzeige (24);
b) Wählen von wenigstens einem der Icons (50-60);
und wobei das Verfahren durch die folgenden Schritte gekennzeichnet ist:
c) Zuordnen von jedem der Vielzahl von Icons (50-60) zu einem anderen Verfahren zum Wählen unter Orten in einer Datenbank (29);
d) Animieren von wenigstens einem der Vielzahl von Icons (50-60) auf der Anzeige (24) durch eine Bewegung; und
e) Wählen des wenigstens einen animierten Icons.

12. Verfahren nach Anspruch 11, ferner einschließend die folgenden Schritte:
f) Anzeigen des Icons (50-60) auf Grundlage eines Basisrahmens, der eine Information zum Anzeigen der Vielzahl von Pixeln (92) umfasst;
g) Ändern der Anzeige (24) des Icons auf Grundlage einer Übergangsdatei (100), die Information zum Anzeigen eines Untersatzes der Vielzahl von Pixeln (92), weniger als alle der Vielzahl von Pixeln (92), umfasst.

13. Verfahren nach Anspruch 12, ferner einschließend die folgenden Schritte:
h) in dem Schritt d), Anzeigen eines ersten Rahmens, der den Basisrahmen umfasst;
i) nach dem Schritt h), Anzeigen eines zweiten Rahmens, der den Basisrahmen wie in Übereinstimmung mit der Übergangsdatei (100) modifiziert, umfasst.

14. Verfahren nach Anspruch 13, ferner umfassend die folgenden Schritte:
Zuordnen von jedem der Vielzahl von Icons (50-60) zu wenigstens einem Zielort; und
Wählen eines Zielorts, der zu dem wenigsten einem der gewählten Icons gehört, die im Schritt e) gewählt werden.

15. Verfahren nach Anspruch 11, ferner umfassend die folgenden Schritte:
Bestimmen einer gegenwärtigen Position;
Wählen des wenigstens einen der Vielzahl von Icons (50-60), die in dem Schritt d) animiert werden;
Wählen eines gewünschten Zielorts, der zu dem wenigstens einen der Vielzahl von Icons gehört; und
Bestimmen einer Route von der gegenwärtigen Position zu dem gewünschten Zielort.

16. Verfahren nach Anspruch 11, ferner umfassend die folgendenSchritte:
f) Anzeigen eines zugehörigen Schirms im Ansprechen auf den Schritt e); und
g) Anzeigen einer kleineren Version des wenigstens einen Icons auf dem zugehörigen Schirm im Ansprechen auf den Schritt f).

## Revendications

1. Système de navigation de véhicule (20) comprenant:
une base de données (29) de localisations;
un affichage qui affiche une pluralité d'icônes (50-60); et
un dispositif d'entrée utilisateur (26), **caractérisé en ce que**:
chacune de ladite pluralité d'icônes (50-60) est associée à au moins un procédé de sélection parmi lesdites localisations dans ladite base de données (29) et **caractérisé en outre en ce que** ledit affichage (24) est agencé pour animer une icône activée parmi ladite pluralité d'icônes (50-60) selon un mouvement en réponse à une activation de l'icône activée par le dispositif d'entrée utilisateur (26).

2. Système de navigation de véhicule (20) selon la revendication 1, incluant en outre:
un système pour déterminer la position du véhicule (32) en relation avec ladite base de données (29);
ledit dispositif d'entrée d'utilisateur (26) sélectionnant une destination souhaitée en relation avec ladite base de données (29) en utilisant un procédé associé de sélection parmi lesdites localisations dans ladite base de données (29) en association avec ladite icône sélectionnée;
un système pour déterminer une route à partir de ladite base de données (29) entre une position du véhicule (32) jusqu'à ladite destination souhaitée.

3. Système de navigation de véhicule (20) selon la revendication 1, dans lequel chaque dite icône (50-60) est associée à un groupe de localisations dans ladite base de données (29), ledit dispositif d'entrée utilisateur (26) sélectionnant une destination souhaitée parmi lesdites localisations associées audit groupe associé à ladite icône activée.

4. Système de navigation de véhicule (20) selon la revendication 1, incluant en outre:
une image de base comprenant une information pour afficher une première icône de ladite pluralité d'icônes (50-60);
au moins un fichier de transitions (100) qui comprend une information pour modifier l'affichage (24) de ladite première icône, ledit affichage (24) affichant en premier ladite première icône sur la base de ladite image de base et modifiant ensuite ledit affichage (24) de ladite première icône sur la base dudit au moins un fichier de transitions (100) afin d'assurer une animation de la première icône.

5. Système de navigation de véhicule (20) selon la revendication 4, dans lequel ladite première icône inclut une pluralité de pixels (92), ladite image de base incluant une information pour afficher tous les pixels de ladite pluralité de pixels (92), ledit fichier de transitions (100) comprenant une information pour afficher seulement un sous-jeu de ladite pluralité de pixels (92) inférieur à tous lesdits pixels de ladite pluralité de pixels (92).

6. Système de navigation de véhicule (20) selon la revendication 5, incluant en outre une pluralité d'images de base, chacune incluant une information différente pour afficher tous les pixels desdits pixels (92) pour ladite icône.

7. Système de navigation de véhicule (20) selon la revendication 5, incluant en outre une pluralité desdits fichiers de transitions (100), chacun incluant une information pour modifier ledit affichage (24) depuis un état dans un autre état incrémentiel.

8. Système de navigation de véhicule (20) selon la revendication 1, dans lequel l'affichage (24) agrandit l'icône activée en réponse à l'activation de l'icône activée par le dispositif d'entrée utilisateur (26).

9. Système de navigation de véhicule (20) selon la revendication 1, incluant en outre un indicateur de texte (72, 78, 80) qui est affiché sur l'affichage (24) à côté de l'icône animée en réponse à l'activation de l'icône activée par le dispositif d'entrée utilisateur (26), l'indicateur de texte (72, 78, 80) indiquant les localisations dans la base de données (29) auxquelles ladite icône animée est associée.

10. Système de navigation de véhicule (20) selon la revendication 1, dans lequel ladite icône activée est animée par ledit affichage (24) qui affiche une pluralité d'images de ladite icône activée.

11. Procédé pour faire fonctionner une interface graphique utilisateur dans un système de navigation de véhicule (20), incluant les étapes de:
a) affichage d'une pluralité d'icônes (50-60) sur un affichage (24); et
b) sélection d'au moins l'une des icônes (50-60),
ledit procédé étant **caractérisé par** les étapes de:
c) association de chacune de la pluralité d'icônes (50-60) à un procédé différent de sélection parmi des localisations dans une base de données (29);
d) animation d'au moins l'une de la pluralité d'icônes (50-60) sur l'affichage (24) au moyen d'un mouvement; et
e) sélection de l'au moins une icône animée.

12. Procédé selon la revendication 11, incluant en outre les étapes de:
f) affichage de ladite icône (50-60) sur la base d'une image de base qui comprend une information pour afficher ladite pluralité de pixels (92); et
g) modification dudit affichage (24) de ladite icône sur la base d'un fichier de transitions (100) qui comprend une information pour afficher un sous-jeu de ladite pluralité de pixels (92), inférieur à tous les pixels de ladite pluralité de pixels (92).

13. Procédé selon la revendication 12, incluant en outre les étapes de:
h) au niveau de ladite étape d), affichage d'une première image qui comprend ladite image de base; et
i) après ladite étape h), affichage d'une seconde image qui comprend ladite image de base comme modifiée conformément audit fichier de transitions (100).

14. Procédé selon la revendication 13, incluant en outre les étapes de:
association de chacune de ladite pluralité d'icônes (50-60) à au moins une destination; et
sélection d'une destination associée à ladite au moins une des icônes animées sélectionnée au niveau de ladite étape e).

15. Procédé selon la revendication 11, incluant en outre les étapes de:
détermination d'une position courante;
sélection de ladite au moins une de ladite pluralité d'icônes (50-60) animée au niveau de ladite étape d);
sélection d'une destination souhaitée associée à ladite au moins une de ladite pluralité d'icônes; et
détermination d'une route depuis ladite position courante jusqu'à ladite destination souhaitée.

16. Procédé selon la revendication 11, incluant en outre les étapes de:
f) affichage d'un écran associé en réponse à ladite étape e); et
g) affichage d'une version plus petite de l'au moins une icône sur l'écran associé en réponse à ladite étape f).
